# FASCICULE DE BREVET EUROPEEN

(11) **EP 2 029 463 B1**
(45) Date de publication et mention de la délivrance du brevet: **21.12.2011**
(21) Numéro de dépôt: 07765978.7
(22) Date de dépôt: 05.06.2007
(51) Int. Cl.: B65G 69/16, B01J 8/00

(54) **DISPOSITIF ET PROCEDE POUR LE CHARGEMENT DE PARTICULES SOLIDES DANS UNE ENCEINTE**
VORRICHTUNG UND VERFAHREN ZUM LADEN VON FESTPARTIKELN IN EINE KAMMER
DEVICE AND METHOD FOR LOADING SOLID PARTICLES INTO A CHAMBER

(30) Priorité: 06.06.2006 FR 0604991
(43) Date de publication de la demande: 04.03.2009
(73) Titulaire: TOTAL RAFFINAGE MARKETING, 92800 Puteaux (FR)
(72) Inventeur: GIRARD, Olivier, 27500 Fourmetot (FR); EMMELIN, Marc, 69390 Millery (FR); PINON, Ulysse, 76600 Le Havre (FR); LEROY, Pascal, 76620 Le Havre (FR); COTTARD, Bernard, 76430 Saint Romain de Colbosc (FR)
(74) Mandataire: Roger, Walter
(86) Numéro de dépôt international: PCT/FR2007/000926
(87) Numéro de publication internationale: WO 2007/141419

(56) Documents cités:
- EP-A1- 0 548 999
- FR-A1- 2 431 449
- US-A- 3 749 258
- US-A- 5 697 408
- US-B1- 6 467 513

## Description

La présente invention concerne un dispositif pour le chargement de particules solides dans une enceinte, notamment dans une enceinte de grande taille dont la hauteur peut atteindre plusieurs dizaines de mètres. Elle concerne également un procédé de chargement d'une telle enceinte, comprenant l'utilisation dudit dispositif de chargement, avec des particules solides dont il est nécessaire de conserver l'intégrité physique.

Le dispositif et le procédé selon l'invention s'appliquent plus particulièrement au chargement de réacteurs à lit de catalyseur fixe, de type chimique ou électrochimique, pétrolier ou pétrochimique, avec des particules solides à l'état divisé qui peuvent se présenter sous forme de billes, de grains, de cylindres, de pastilles, de bâtonnets ou sous toute autre forme, mais qui sont de dimensions relativement faibles. Les particules solides sont plus spécifiquement des billes chimiquement inertes utilisées dans les réacteurs chimiques, des tamis moléculaires, ou des grains de catalyseurs servant dans des réactions de transformations de produits chimiques ou hydrocarbonés tel que le reformage, le craquage, la désulfuration d'hydrocarbures ou plus généralement les hydrotraitements. De telles particules se présentent le plus souvent sous la forme de billes, d'extrudés ou d'éléments multilobes dont les dimensions varient selon les cas, de quelques dixièmes de millimètres à quelques centimètres.

L'invention sera décrite ci-après pour le chargement de billes inertes, généralement constituées en alumine, matériau céramique ou tout matériau procurant une forte résistance à la température et à la brisure, chargées dans les réacteurs chimiques à lit catalytique fixe. La Demanderesse n'entend toutefois pas se limiter à cette application particulière car le dispositif et le procédé selon l'invention peuvent servir à l'introduction de grains de catalyseurs dans un réacteur ou de tout autre type de particules solides dans tout type d'enceinte, par exemple des silos de stockage, des cales de navires ou autres.

On sait que de nombreux réacteurs chimiques, y compris ceux de très grandes dimensions, par exemple d'une hauteur de 5 à 50 mètres ou plus, et d'un diamètre d'environ 1 à 10 mètres ou plus, comportent en fond de capacité, au-dessous du lit de catalyseur, une couche de billes inertes, par exemple à forte concentration en alumine, de dimensions supérieures à celles des grains de catalyseur, de manière à éviter que ces derniers ne soient évacués accidentellement par le flux liquide à travers le collecteur de fond du réacteur.

Ces billes ont un diamètre généralement inférieur à 5 cm et elles forment, à la base du réacteur - ou en tout autre endroit de celui-ci, par exemple sur le plateau support de lit dans le cas d'un réacteur à double lit catalytique -, un lit dont l'épaisseur peut atteindre plus de deux mètres.

Lors du chargement de ces billes, il est essentiel qu'elles soient déposées intactes au fond du réacteur ou sur le plateau support de lit, car si elles se brisent en petits fragments, elles risquent d'obturer le collecteur en sortie du réacteur ou le plateau support, provoquant ainsi une différence de pression entre l'entrée et la sortie du réacteur, extrêmement préjudiciable au rendement du réacteur et donc en fin de compte à la production mise en place par l'exploitant.

Il est donc nécessaire d'assurer le chargement des billes inertes au fond du réacteur, sans brisure, ni attrition, c'est-à-dire sans choc entre billes ou sur les parois du réacteur, autrement dit sans énergie due par exemple à une vitesse de chute excessive à l'intérieur du réacteur.

Plusieurs procédés de chargement de réacteurs avec de telles billes relativement fragiles sont connus.

Le chargement par des sacs ou des seaux remplis de billes, introduits individuellement dans le réacteur, puis vidés par un opérateur au fond de celui-ci, constitue une technique très sûre mais trop lente pour être normalement exploitable, notamment dans des réacteurs présentant une importante hauteur.

Une autre technique consiste à charger les billes à l'aide d'une manche souple, d'un diamètre de 100 à 200 millimètres, fonctionnant en pleine charge, c'est-à-dire remplie de billes d'une extrémité à l'autre. L'opérateur distribue les billes au fond du réacteur en réglant manuellement le diamètre d'ouverture de l'extrémité inférieure de la manche tout en déplaçant celle-ci dans le réacteur. Cette méthode, qui ne permet pas de garantir un taux de réussite du chargement proche des 100 % de billes intactes, présente un risque d'accident important pour l'opérateur. En effet, la manche souple supporte un poids important, et le poids de la manche souple en charge est directement lié à sa longueur, c'est-à-dire à la hauteur du réacteur à charger. En cas de mauvaise manipulation du système d'ouverture ou en cas de déchirure ou de décrochage, la manche souple peut tomber ou se vider totalement et brusquement, ce qui entraîne non seulement la casse des billes mais présente un risque considérable pour la sécurité de l'opérateur.

La Demanderesse a proposé dans sa demande de brevet FR-A1-2 829 107, une manche semi-rigide sinueuse ou hélicoïdale dans laquelle les billes descendent en roulant sur la face intérieure de la manche, la vitesse de descente (et donc l'énergie cinétique en bout de course) pouvant être réglée par l'inclinaison de la pente de la manche. Le dispositif décrit dans cette demande est tout à fait satisfaisant tant du point de vue de la vitesse de chargement que de la qualité de remplissage, mais il a l'inconvénient de présenter plusieurs problèmes d'encombrement. En effet, la forme sinueuse ou hélicoïdale du dispositif et la relative rigidité du matériau constituant la manche rendent difficiles son transport ainsi que son installation et son démontage à travers les orifices de passage dans le réacteur, encore appelés dans la profession « trous d'homme » du réacteur.

Dans la demande de brevet FR 2 874 212, la Demanderesse a également proposé une manche droite souple et cylindrique à l'intérieur de laquelle une rampe hélicoïdale, fixée sur un axe central et enroulée autour de cet axe, permet de limiter la vitesse de descente des billes sur ladite rampe. Si les résultats obtenus lors de chargement de billes inertes ou de grains de catalyseur avec ce type de dispositif sont en net progrès par rapport à ceux obtenus avec les dispositifs et procédés de l'art antérieur, il n'en demeure pas moins que pour les très hauts réacteurs, par exemple pour des hauteurs supérieures à trente mètres, des risques latents existent qui peuvent être dus, par exemple, à des déchirures de la manche quand celle-ci est en charge, c'est-à-dire remplie de particules solides sur toute sa longueur, qui peuvent se transformer en danger potentiel pour les opérateurs évoluant en fond de réacteur.

On connait egalement du document US 5 697 408 un dispositif pour le chargement de particules dans un carton.

Un dispositif pour le chargement de particules solides selon le préambule de la revendication 1 est décrit dans le document US 5 697 408.

La Demanderesse s'est fixée pour objectif de proposer un dispositif de chargement d'un réacteur avec des particules solides qui présente les avantages mais non les inconvénients des dispositifs et procédés décrits dans l'art, autrement dit un dispositif permettant de charger au fond d'une enceinte, avec un débit élevé et en toute sécurité pour les opérateurs, des particules solides à l'état divisé relativement fragiles sans les casser, ni générer des quantités importantes de poussières ou de fines de particules.

Le but de la présente invention est donc de réaliser un dispositif d'introduction de particules solides dans une enceinte, qui peut être facilement introduit dans cette enceinte, et qui ne provoque qu'une attrition très limitée des particules solides lorsque celles-ci sont acheminées dans ladite enceinte.

Un autre but de la présente invention est de proposer un procédé de chargement d'une enceinte, comprenant l'utilisation du dispositif selon l'invention.

A cet effet, l'invention concerne un dispositif pour le chargement particules solides dans une enceinte selon le revendication 1.

Selon l'invention, le moyen permettant le contrôle de la vitesse de chute des particules est un élément mobile apte à assurer le transport des particules. Un autre moyen est exemple, un gaz propulsé dans la direction inverse à celle de la chute des particules solides avec un débit commandé en fonction de la hauteur de chute des particules solides.

L'élément mobile est, de façon avantageuse selon l'invention, apte à assurer le transport des particules solides et en particulier à permettre le transport des particules solides du haut vers le bas de l'enceinte, en contrôlant la vitesse de chute desdites particules solides. Ceci est particulièrement avantageux en début de processus de chargement quand les particules solides doivent être directement acheminées dans la partie basse de l'enceinte.

Le dispositif selon un mode de réalisation de l'invention est, de préférence, tel que l'élément mobile peut adopter différents types de formes, en particulier il est du type cône avec pointe en bas, du type sphère, ou du type cylindre, de préférence évidé en forme de « I ».

Selon un mode de réalisation de l'invention, l'élément mobile a généralement une hauteur comprise de une à cinq fois le diamètre interne de la conduite, et de façon encore plus préférée de une à deux fois le diamètre interne de la conduite.

A l'élément mobile est généralement associé au moins un élément d'étanchéité disposé entre un bord extérieur, généralement supérieur, de l'élément mobile et la surface interne de la conduite. Ceci permet avantageusement d'éviter que, au cours du transport des particules solides, et notamment au cours du transport du haut vers le bas des particules solides, des particules puissent migrer autour de l'élément mobile et tomber directement en bas de l'enceinte.

Avantageusement, l'élément d'étanchéité est constitué d'une matière souple, de préférence d'une succession de poils souples, généralement de même longueur, ou d'un joint creux, de préférence en matière souple. Une telle succession de poils souples est avantageusement répartie de manière radiale autour de l'élément mobile sur une ou plusieurs rangées. Par exemple, une première rangée située vers la partie supérieure de l'élément mobile est constituée de poils souples, généralement tous d'une certaine longueur, et répartis radialement, et une deuxième rangée située à courte distance au-dessous de la première rangée est constituée à l'identique de cette première rangée. Mais la deuxième rangée peut aussi être telle que les poils souples qui la constituent sont de longueur différente, généralement dans leur ensemble, de la longueur de l'ensemble des poils souples de la première rangée.

Selon un mode de réalisation de l'invention, le déplacement de l'élément mobile peut être obtenu par l'intermédiaire d'au moins un câble qui relie une partie supérieure de l'élément mobile à un moyen moteur. Le moyen moteur est tel que connu de l'homme de métier.

Selon l'invention, une deuxième conduite est disposée selon un axe sensiblement parallèle à l'axe de la conduite destinée à l'introduction des particules solides. Selon un mode de réalisation de l'invention, ladite deuxième conduite est apte à être maintenue en dépression pour permettre l'aspiration des poussières et des brisures éventuelles présentes dans l'enceinte, le plus souvent dans la partie inférieure de l'enceinte. Ces poussières sont le plus souvent essentiellement des poussières recouvrant partiellement les particules solides avant chargement, et mises en circulation lors des mouvements desdites particules solides, par exemple lors de leur installation au bas de l'enceinte. Ces brisures sont des brisures des particules solides, éventuellement occasionnées pendant le chargement.

Il est aussi possible, selon un autre mode de réalisation de l'invention, que au moins un moyen d'alimentation, de préférence l'ensemble des moyens d'alimentation, nécessaire(s) à différentes mises en oeuvre dans l'enceinte, soit disposé dans la deuxième conduite. Ainsi, selon un mode de réalisation, ladite deuxième conduite est apte à être maintenue en dépression pour permettre l'aspiration des poussières et des brisures éventuelles présentes dans l'enceinte, le plus souvent dans la partie inférieure de l'enceinte, et au moins un moyen d'alimentation, de préférence l'ensemble des moyens d'alimentation, nécessaire(s) à différentes mises en oeuvre dans l'enceinte, est disposé dans cette même deuxième conduite.

Selon un mode de réalisation de l'invention, il est possible qu'une troisième conduite soit disposée, en plus de la deuxième conduite, selon un axe sensiblement parallèle à l'axe de la conduite destinée à l'introduction des particules solides dans l'enceinte, et donc sensiblement parallèlement à l'axe de la deuxième conduite.

Selon un mode de réalisation particulièrement avantageux du dispositif de l'invention, la deuxième conduite est destinée à être maintenue en dépression pour permettre l'aspiration des poussières et éventuellement des brisures éventuelles, présentes le plus souvent dans la partie inférieure de l'enceinte, tandis que au moins un moyen d'alimentation, de préférence l'ensemble des moyens d'alimentation, nécessaire(s) à différentes mises en oeuvre dans l'enceinte, est disposé dans la troisième conduite. Cette troisième conduite est alors généralement ouverte sensiblement sur toute sa longueur, et au moins un système d'au moins une, de préférence plusieurs, attache(s), de type « Velcro » ou analogue, à utilisation rapide, est disposé de façon à ce que ces attaches soient présentes à intervalles sensiblement réguliers tout le long de ladite conduite, ce qui permet de maintenir les différents moyens d'alimentation à l'intérieur de cette troisième conduite. Le système d'attaches rapides est avantageusement particulièrement utile pour l'extraction rapide d'au moins un moyen d'alimentation, par exemple un tuyau d'oxygène alimentant un opérateur devant être remonté en urgence au sommet de l'enceinte.

Selon un mode de réalisation de l'invention, le moyen d'alimentation est généralement un tuyau d'alimentation en fluide (liquide ou gazeux) ou un câble électrique.

La section de la conduite destinée à l'introduction des particules solides dans l'enceinte est comprise de 20 à 2000 centimètres carrés, de préférence de 100 à 1000 centimètres carrés.

De préférence, la section de chacune des deuxième et troisième conduites est, indépendamment l'une de l'autre, comprise de 5 à 1000 centimètres carrés, de préférence de 20 à 1000 centimètres carrés, si ces conduites sont présentes. Si la deuxième conduite est présente, et non la troisième conduite, ces fourchettes s'appliquent uniquement à ladite deuxième conduite.

Bien évidemment, le nombre de conduites constituant l'invention n'est pas limité à trois, ce nombre pouvant évoluer en fonction des besoins. On peut par exemple, disposer deux conduites parallèles destinées à l'introduction de particules solides de nature chimique différente, chacune de ces deux conduites étant équipée de son propre élément mobile, et les deux conduites étant associées comme précédemment à au moins une autre conduite destinée à des moyens spécifiques de mise en oeuvre dans l'enceinte, par exemple pour la répartition des billes inertes ou des grains de catalyseurs dans le réacteur à charger.

Dans un autre mode de réalisation de l'invention, les deuxième et troisième conduite ne sont pas disposées selon un axe sensiblement parallèle à l'axe de la conduite destinée à l'introduction des particules solides, mais sont disposées de manière sensiblement concentrique. Par exemple, la deuxième conduite destinée à l'aspiration contient la conduite nécessaire à l'introduction des particules, cette deuxième conduite étant contenue dans une troisième conduite destinée au rangement d'au moins un moyen d'alimentation pour différents mises en oeuvre dans le réacteur, et qui peut être ouverte sur toute sa longueur pour les raisons explicitées ci-dessus l'invention, la manche

Selon l'invention, la manche comprend plusieurs éléments unitaires (ou tronçons) s'emboîtant successivement les uns dans les autres. La longueur d'un tel élément unitaire est généralement comprise de 1,00 à 6,00 mètres, de préférence de 1,00 à 2,00 mètres. Par plusieurs, on entend selon l'invention généralement au moins deux.

De façon préférée, les éléments unitaires sont fixés les uns aux autres, par au moins un moyen de fixation disposé généralement à l'extérieur des éléments unitaires, par exemple par des tiges filètées munies d'écrous à leurs extrémités et disposées à l'extérieur des éléments unitaires. Mais tout autre moyen de fixation connu de l'homme du métier est aussi utilisable selon l'invention. De plus, sur chaque élément unitaire peuvent être fixés au moins deux brides de fixation, de préférence diamétralement opposées, destinées chacune à l'accrochage et/ou au guidage d'au moins une chaîne ou un câble de fixation nécessaire au maintien de la manche à l'intérieur de l'enceinte.

De préférence selon l'invention, ladite manche est réalisée en matériau rigide, tel que l'aluminium, l'acier, inoxydable ou non, ou tout matériau constitué de fibres maintenues par un liant offrant une bonne résistance mécanique aux chocs et à la déformation.

L'invention concerne aussi un procédé de chargement d'une enceinte, notamment d'un réacteur chimique, avec des particules solides, ledit procédé comprenant l'utilisation du dispositif de chargement selon l'invention tel que décrit précédemment.

L'invention concerne en outre un procédé de chargement d'une enceinte, notamment d'un réacteur chimique, avec des particules solides, comprenant la fixation du dispositif de chargement selon l'invention tel que décrit précédemment par sa partie supérieure, généralement au niveau d'une ouverture présente dans la partie supérieure de l'enceinte (par exemple un trou d'homme), et l'utilisation dudit dispositif de chargement.

Outre la fixation du dispositif de chargement selon l'invention dans la partie supérieure de l'enceinte, celui-ci est généralement fixé dans sa partie basse par au moins une chaîne (ou câble) de fixation, par l'intermédiaire d'au moins une bride de fixation, généralement reliée à au moins un moyen de levage disposé de préférence au niveau le plus élevé de l'enceinte à charger. De préférence, le dispositif est relevé périodiquement pour libérer de l'espace à charger dans l'enceinte.

En effet, au fur et à mesure que la quantité de particules solides chargées augmente lors du chargement du réacteur, il devient nécessaire de remonter la manche afin de libérer de l'espace pour poursuivre le chargement.

L'ensemble de la manche, constituée généralement de plusieurs éléments unitaires, est alors remontée par le moyen de levage relié à la chaîne (ou câble) de fixation de ladite manche, d'une hauteur correspondant à la hauteur de l'espace qu'il est nécessaire de libérer pour assurer un nouveau cycle de chargement.

Un ou plusieurs éléments unitaires sont alors démontés et la manche repositionnée pour un nouveau cycle d'alimentation en particules solides.

De préférence, l'élément mobile est positionné en début de chaque cycle de chargement en position haute dans la manche avant l'introduction des particules solides par l'extrémité supérieure de la manche.

L'élément mobile est ensuite généralement descendu, tout en maintenant le flux d'introduction des particules solides, à sa position de repos située à proximité de l'extrémité inférieure de la manche, permettant ainsi de contrôler la vitesse de chute des particules solides et d'éviter la chute libre desdites particules solides. Cela permet d'initier le chargement. Ensuite, la manche étant pleine, le chargement se poursuit en continu.

Selon un procédé de chargement de l'invention, les particules solides sont généralement déversées dans l'enceinte par l'intermédiaire d'un tube relié à la manche, par une jonction située au-dessus de la partie supérieure de l'élément mobile quand celui-ci est en position haute dans la manche.

Le procédé de chargement selon l'invention peut comprendre, en outre, la répartition, par exemple par un opérateur, des particules solides sortant par un tube relié à la partie inférieure de la manche, sur toute la surface du fond de l'enceinte ou d'un front de chargement.

Le procédé de l'invention peut aussi comprendre, en outre, l'alimentation, par les particules solides sortant par un tube relié à la partie inférieure de la manche, de tout dispositif de répartition automatique des particules solides sur toute la surface du fond de l'enceinte ou du front de chargement. Par exemple, un tel dispositif de répartition automatique des particules solides peut être le dispositif qui fait l'objet de la demande de brevet FR-A1-2 431 449.

Le procédé de chargement selon l'invention est de préférence tel que les poussières et les brisures éventuelles, présentes en partie inférieure de la manche, et notamment, les poussières et brisures éventuellement formées lors de la répartition des grains de catalyseur en partie inférieure de la manche par le dispositif ci-dessus indiqué, ou tout dispositif ayant la même fonction de répartition homogène des particules solides, sont aspirées au moyen d'une deuxième conduite.

Ledit procédé de chargement est aussi avantageusement tel que l'on loge tout câble ou tuyau nécessaire aux activités de chargement et de répartition des particules solides dans l'enceinte, dans une troisième conduite, laquelle est généralement ouverte sur toute sa longueur, ce qui permet un logement rationnel des moyens d'alimentation tels que des câbles et tuyaux souples.

Diverses formes de mise en oeuvre de l'invention vont être décrites ci-après à titre d'exemple.

Dans cette description, on se référera aux dessins annexés dans lesquels :
La figure 1 est une vue générale schématique d'un réacteur chimique en coupe comportant un dispositif selon l'invention pour le chargement de particules solides.
La figure 2 est une vue de détail en coupe de la figure 1, en particulier de la partie inférieure du dispositif selon l'invention.
La figure 3 est une vue en coupe de la section du dispositif selon l'invention située immédiatement en dessous de l'extrémité supérieure de l'ouverture du réacteur chimique, ou trou homme, de la figure 1.
La figure 4 est une vue latérale d'une réalisation d'un élément mobile présent dans le dispositif selon l'invention représenté sur la figure 1.
La figure 5 est une vue schématique en coupe du début de chargement du réacteur chimique de la figure 1.
La figure 6 est une vue schématique du chargement en cours du réacteur chimique de la figure 1 après la descente complète de l'élément mobile.
La figure 7 est une vue de détail en perspective vue du dessus d'une manche du dispositif selon l'invention représenté sur la figure 1.

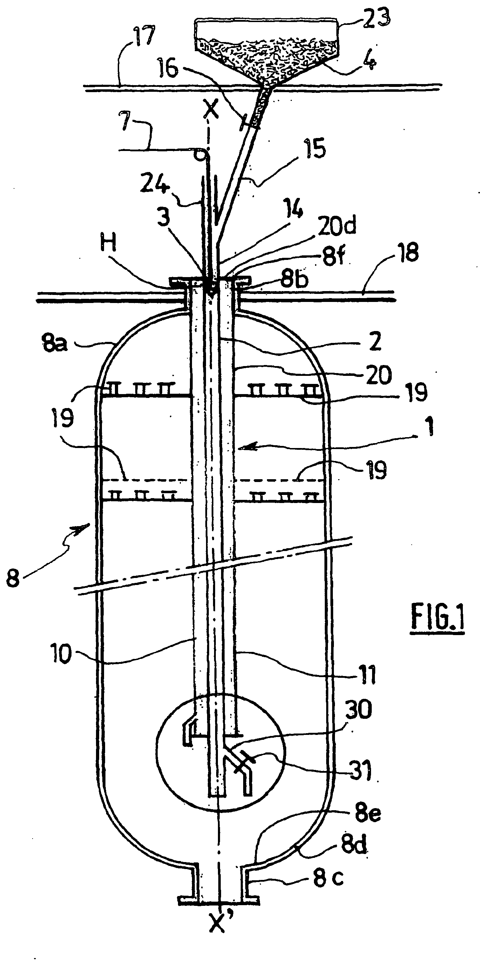

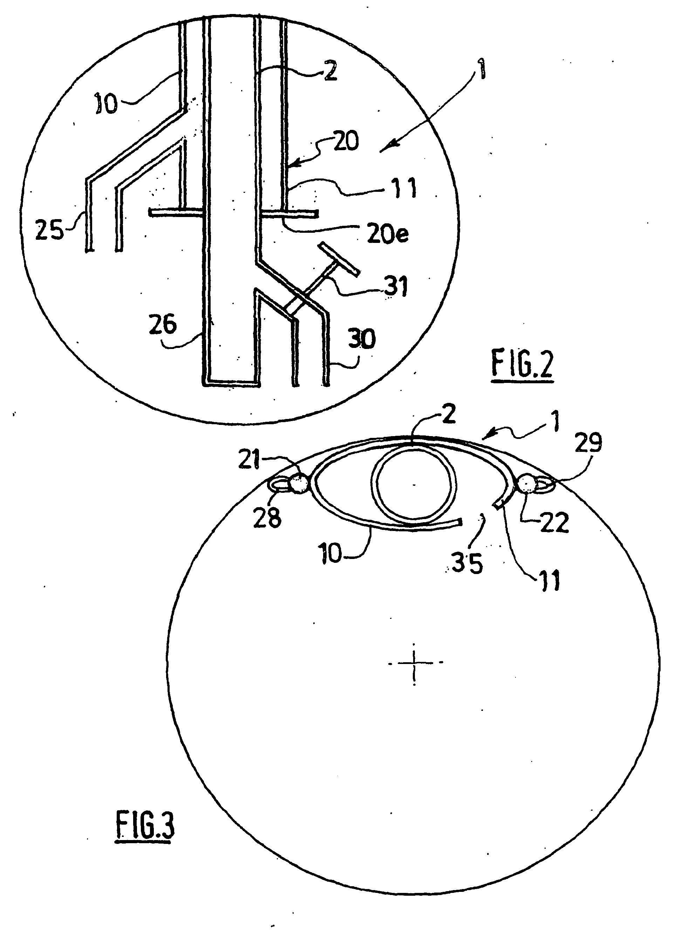

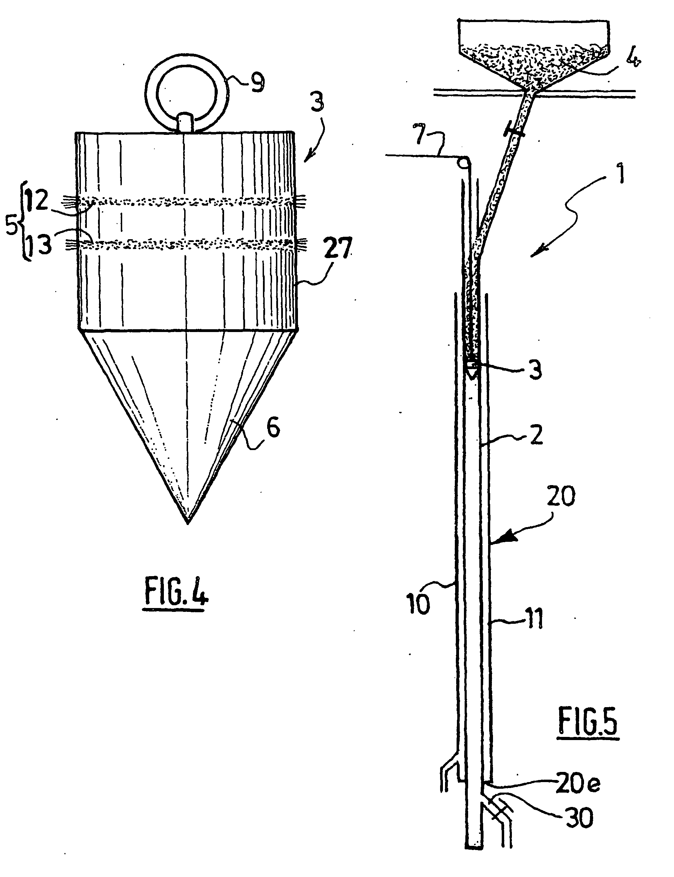

La figure 1 est une vue générale schématique d'un réacteur chimique 8 en coupe comportant un dispositif 1 selon l'invention pour le chargement des particules solides 4. Les figures 2, 3 et 4 servent à expliciter la figure 1, et sont commentées ci-après en liaison avec la figure 1, la figure 2 étant une vue en coupe de la partie inférieure du dispositif 1, la figure 3 étant une vue en coupe de la section du dispositif 1 selon l'invention située immédiatement au dessous de l'extrémité supérieure de l'ouverture 8b du réacteur chimique 8, et la figure 4 étant une vue latérale de l'élément mobile 3 présent dans le dispositif 1.

L'enceinte 8 est ici un réacteur chimique 8 comportant divers éléments 19 spécifiques d'un réacteur chimique tels des plateaux distributeurs de la charge à traiter. Le réacteur chimique 8 comporte une partie supérieure 8a, d'ouverture supérieure ou goulot ou bride 8b, et une partie inférieure 8d, d'ouverture 8c et de fond 8e.

Le dispositif 1 selon l'invention comprend une manche 20 dans laquelle peuvent circuler de haut en bas les particules solides 4, comportant une conduite 2 destinée à l'introduction des particules solides 4, la conduite 2 comprenant un élément mobile 3 apte en particulier à permettre un contrôle de la vitesse de chute des particules solides 4 en assurant le transport desdites particules solides 4 du haut vers le bas de la manche, en particulier en début de chargement. Les particules solides 4 sont issues d'une trémie 23 qui alimente un conduit 15 par l'intermédiaire d'une vanne 16. La trémie 23 est soutenue par un plan de support 17 qui peut être, par exemple, un échafaudage ou une plateforme spécifiquement installée sur la partie supérieure du réacteur. Le conduit 15 relié au tube 14 par un tube souple (non représenté), alimente ce même tube 14 qui est, en sa partie supérieure, un prolongement de la conduite 2.

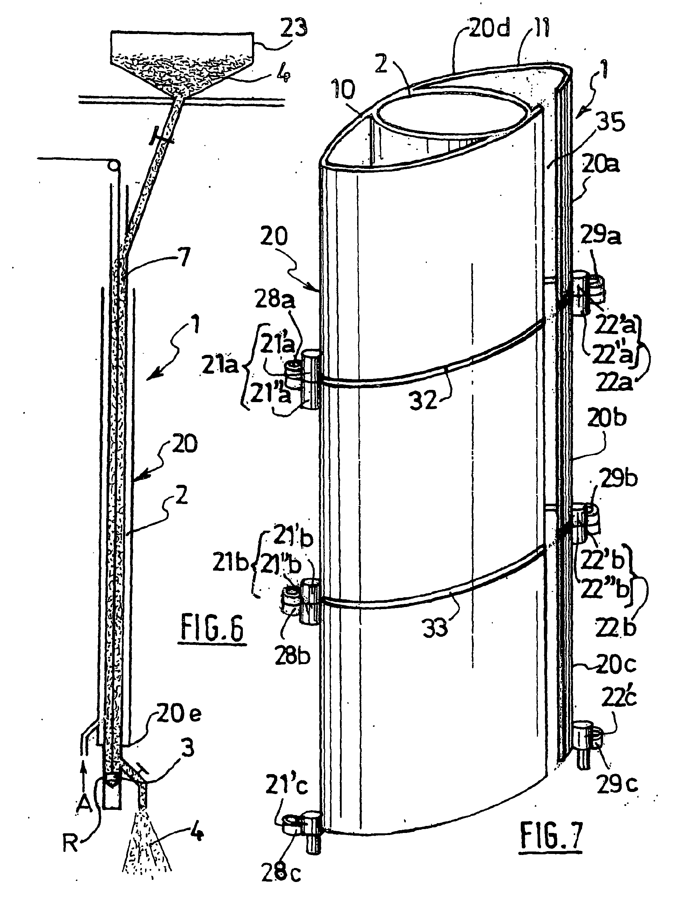

Le dispositif 1 comprend selon l'invention, ainsi qu'il est montré sur la figure 3, une conduite centrale 2 destinée à l'introduction des particules solides associée à deux autres conduites 10 et 11 respectivement destinées à l'aspiration des poussières et au passage des moyens d'alimentation en différents fluides, deux moyens de fixation 21 et 22, diamétralement opposés, et situés à l'extérieur de la manche et qui sont destinés au passage des tiges filetées munies d'écrous à leur extrémité. Ces moyens de fixation 21 et 22 comportent des brides de fixation ou de guidage, respectivement 28 et 29 (également repérées 28a, 28b, 28c, et 29a, 29b, 29c sur la figure 7), d'au moins une chaîne ou câble (non représenté) nécessaire au maintien de la conduite 2 à l'intérieur de l'enceinte 8. La conduite 10 est une deuxième conduite destinée à aspirer, par une conduite 25 montrée sur la figure 2 reliée par exemple à un tube souple armé (non représenté), les poussières et les brisures éventuellement présentes sur le lieu de répartition des particules solides dans le réacteur 8, et plus particulièrement au niveau de la partie inférieure 30 de la manche 20. La conduite 11 est une troisième conduite destinée à contenir les moyens d'alimentation (non représentés) nécessaires à différentes mises en oeuvre dans l'enceinte 8. La conduite 11 débouche en sa partie inférieure à proximité de la partie inférieure 20e de la manche 20, et comporte différents moyens (non représentés) pour permettre le passage des différents moyens d'alimentation. Les conduites 10 et 11 sont définies comme les deux espaces complémentaires de la conduite 2 de la manche 20 constituant le dispositif 1. Sur toute sa hauteur, la conduite 11 de la manche 20 comporte une ouverture 35 destinée au passage d'au moins un des moyens d'alimentation.

A l'extrémité supérieure de la conduite 2, ainsi qu'il est montré sur la figure 1, l'élément mobile 3 est en place en position haute H. L'élément mobile 3 est maintenu par l'intermédiaire d'un câble 7 qui relie l'élément mobile 3 à un moyen moteur (non représenté).

L'élément mobile 3 est représenté plus en détail sur la figure 4. Il comporte, de haut en bas, un crochet d'attache ou élément supérieur 9, auquel est fixé le câble 7, un cylindre 27 relié au crochet 9 et, du côté opposé au crochet 9, une partie inférieure, prolongeant le cylindre 27, qui est un cône 6. La plus grande section du cône 6 est une section du cylindre 27. L'élément mobile 3 comporte de plus un élément 5 d'étanchéité qui est disposé sur un bord extérieur du cylindre 27 et qui est destiné à venir s'appuyer contre la surface interne de la conduite 2.

L'élément d'étanchéité 5 est composé de deux rangées semblables de poils, sensiblement de même longueur, s'étendant chacune radialement sur toute la circonférence d'une section transversale du cylindre 27, la rangée 13 étant située légèrement en dessous de la rangée 12. Le câble 7 retient l'élément mobile 3, qui a été engagé dans la conduite 2 par une conduite 24 puis par la conduite ou jonction 14.

Dans sa partie inférieure, ainsi qu'explicité plus en détails sur la figure 2, la conduite 2 se termine par une conduite de logement 26, dans laquelle viendra se loger l'élément mobile 3 dans une position de repos R, ainsi qu'explicité ci-après sur la figure 6, et par un conduit 30 situé sur un côté latéral de la conduite 2 et qui comporte une vanne de fermeture ou d'ouverture 31, pour alimenter le réacteur 8 en particules solides 4. Le conduit latéral 30 peut avantageusement alimenter, dans sa partie inférieure, un dispositif de répartition de solide divisé dans une enceinte (non représenté) tel que celui décrit dans la demande de brevet français FR-A1-2 431 449.

Le fonctionnement dans un procédé de chargement d'une enceinte 8 selon l'invention est explicité ci-après à l'aide des figures 5 et 6. Au début de ce procédé, ainsi que représenté sur la figure 1, l'élément mobile 3 est en position haute H.

Les figures 5 et 6 sont des vues schématiques en coupe respectivement du début et du chargement en cours du réacteur chimique 8 de la figure 1.

Sur la figure 5, le procédé de chargement est à son début, et les particules solides 4 ont commencé à être distribuées dans le réacteur 8 par la conduite 2, la vanne 16 ayant été ouverte. Par rapport à la figure 1, l'élément mobile 3 a amorcé une descente, contrôlant parfaitement, grâce à sa vitesse de déplacement, la chute des particules solides 4 à l'intérieur de la conduite 2. Sur la figure 6, le procédé de chargement est en phase continue, l'élément mobile 3 ayant rempli sa fonction et s'étant positionné, dans sa position de repos R, dans la conduite de logement 26. Les particules solides 4 sont distribuées à l'intérieur du réacteur 8 par l'intermédiaire de la conduite 2 puis de la conduite 30, la vanne 31 étant ouverte. On peut alors alimenter en continu le réacteur chimique 8 par les particules solides 4 avec une conduite 2 constamment en charge, c'est-à-dire sans espace vide ne contenant pas de particules solides 4.

Sur la figure 7, trois des tronçons ou éléments unitaires constituant la manche 20 sont représentés sans les attaches de type « Velcro » de la conduite 11. La manche 20 comporte, en plus de la conduite 2 destinée à l'acheminement des particules solides, la conduite 10 et la conduite 11, la conduite 11 comportant l'ouverture 35. Elle a un bord supérieur 20d. Ces trois tronçons 20a, 20b et 20c sont fixés les uns aux autres par l'intermédiaire de broches venant s'insérer dans des logements creux : les broches 21'a et 22'a, pour l'élément unitaire 20a, 21'b et 22'b, pour l'élément unitaire 20b, et 21'c et 22'c, pour l'élément unitaire 20c, viennent s'insérer dans des logements qui sont respectivement 21"a et 22 "a, pour l'élément unitaire 20b, et 21"b et 22"b, pour l'élément unitaire 20c. Arbitrairement, l'ensemble des broches 21'a, 21'b et 21'c est la « broche » 21, et l'ensemble des broches 22'a, 22'b et 22'c est la « broche » 22. A chaque broche 21'a, 21'b, 21'c, 22'a, 22'b, et 22'c est associée respectivement une bride de fixation 28a, 28b, 29c, 29a, 29b et 29c. Arbitrairement, l'ensemble des brides 28a, 28b et 28c est la « bride 28, et l'ensemble des brides 29a, 29b et 29c est la « bride » 29. Ainsi, la manche 20 est composée d'éléments unitaires s'emboîtant les uns dans les autres, de façon modulable.

Un joint, de préférence en caoutchouc, disposé entre les différents tronçons, assure l'étanchéité entre deux tronçons consécutifs et, en particulier, pour la conduite maintenue en dépression et destinée à l'aspiration des poussières et fines. Ainsi, entre le tronçon 20a et le tronçon 20b est disposé un élément d'étanchéité 32, et entre le tronçon 20b et le tronçon 20c est disposé un élément d'étanchéité 33.

### Exemple

Deux essais E de chargement sont successivement réalisés avec deux manches différentes dont les hauteurs sont identiques au-dessus du sol et égales à trente mètres. Les extrémités inférieures des deux manches sont fixées à un mètre du sol.

L'une des manches est conforme à la présente invention et appartient au dispositif 1 selon l'invention décrit en référence aux figures 1 à 7. Elle est constituée d'un ensemble de 18 éléments unitaire tous identiques fixés solidement les uns aux autres comme indiqué dans la présente description. L'élément supérieur contient une alimentation de la conduite centrale en particules solides en provenance d'une trémie, tandis que l'élément inférieur dispose d'au moins une sortie pour évacuer les particules solides en provenance de la manche.

La manche est réalisée en aluminium avec une épaisseur de 8 millimètres. Le diamètre intérieur de la conduite centrale servant à l'alimentation en particules solides est de 150 millimètres.

L'élément mobile est du type cône pointe en bas avec deux rangées de poils souples en matière plastique constituant l'élément d'étanchéité, lesdits poils de chacune des rangées étant harmonieusement répartis de manière radiale sur tout le pourtour de l'élément mobile et dont la densité est telle qu'elle ne permet pas au grain de catalyseur de traverser ladite rangée de poils.

Le diamètre de la plus grande section du cône est égal à 148 millimètres et sa hauteur totale est égale à 225 millimètres.

La vitesse de descente de l'élément mobile est de 10 mètres par minute.

L'autre manche est une gaine cylindrique souple, d'un diamètre interne de 150 mm, suspendue à la verticale, dans laquelle on laisse tomber les billes en chute libre.

On utilise pour ces essais E des billes inertes en alumine fabriquées par la société allemande Vereinigte Füllkörper Fabriken GmbH et commercialisées en France sous l'appellation Duranit. Ces billes ont le diamètre moyen suivant : 12, 67 mm (1/2 pouce).

Une plaque métallique simulant le fond du réacteur est disposée à 1 m de l'extrémité inférieure de chaque manche. La masse des billes utilisées est de 200 kg.

Après essai, les billes cassées ou endommagées sont isolées des billes intactes, elles sont ensuite pesées afin de déterminer le taux de billes ayant subi un dommage pendant leur descente.

Les résultats comparatifs sont indiqués dans le tableau 1 ci-dessous.

**Tableau 1: Comparaison des résultats obtenus avec la manche selon l'invention et la manche souple connue de l'art antérieur**

| **Essai** | **% billes cassées ou endommagées** | |
|---|---|---|
| | Manche selon l'invention | Manche souple selon l'état de la technique |
| **E** | 0,02 | 32,00 |

On constate qu'alors que, pour ces essais E, le pourcentage des billes intactes est de quasiment 100 % avec la manche conforme à l'invention, alors qu'il se situe à 68 % avec la manche souple selon l'art antérieur.

Ceci s'explique essentiellement par la différence entre les vitesses de chute des billes dans les deux manches. En effet, avec la manche du dispositif conforme à la présente invention, la vitesse de chute des particules solides est contrôlée par l'élément mobile jusqu'à l'extrémité inférieure de la manche, ce qui réduit d'autant l'énergie cinétique des billes acquise lors de leur chute libre de 30 mètres. Alors qu'avec la manche souple selon l'état de la technique, disposée verticalement, la vitesse de chute des particules solides n'est pas contrôlée.

Ces résultats illustrent clairement l'avantage que présentent le dispositif et le procédé conformes à l'invention pour le chargement de la partie de fond d'un réacteur chimique, ou d'un plateau support de lit, avec des billes inertes.

Comme indiqué ci-dessus, ce dispositif et ce procédé ne sont toutefois pas limités à cette application, mais peuvent également être utilisés pour le chargement ou le déchargement d'une enceinte avec des particules solides, telles des particules de catalyseur, dont il est nécessaire de préserver l'intégrité et les qualités physiques.

Un autre avantage important de l'invention est le renforcement de la sécurité pour les personnes opérant à l'intérieur du réacteur.

En effet, une manche du dispositif conforme à la présente invention se présente généralement comme un cylindre aplati sur sa longueur. Le rayon d'un des côtés de la manche étant sensiblement égal au rayon du trou d'homme, la manche peut être positionnée au plus près d'une extrémité dudit trou d'homme. La conséquence de cette disposition étant un espace gagné par rapport à l'art antérieur pour une évacuation en urgence d'un opérateur. De plus, les câbles et tuyaux d'alimentation en différents fluides sont généralement disposés dans une des conduites, ce qui permet de libérer d'autant l'espace de sécurité pour ledit opérateur.

## Revendications

1. Dispositif (1) pour le chargement de particules solides (4) dans une enceinte (8), notamment un réacteur chimique (8), comprenant une manche (20) dans laquelle les particules solides (4) sont aptes à circuler, généralement du haut vers le bas, ladite manche (20) comprenant au moins une conduite (2) à axe sensiblement vertical (X'X), réalisée de préférence en une matière rigide,
ledit dispositif étant **caractérisé en ce que**
la conduite (2) contient au moins un moyen (3) apte à permettre le contrôle de la vitesse de chute des particules (4) dans ladite conduite (2), ce moyen étant un élément mobile (3) apte à assurer le transport des particules solides (4), et
la manche (20) comprend plusieurs éléments unitaires identiques (20a,20b,20c) s'emboîtant successivement les uns dans les autres,
et **en ce qu'**une deuxième conduite (10) est disposée selon un axe sensiblement parallèle à l'axe (X'X) de la conduite (2) destinée à l'introduction des particules solides (4), la deuxième conduite (10) étant apte à être maintenue en dépression pour permettre l'aspiration (A) des poussières et éventuellement des brisures éventuelles présentes dans l'enceinte (8).

2. Dispositif (1) selon la revendication 1, **caractérisé en ce qu'**au moins un élément d'étanchéité (5) est disposé entre un bord extérieur, généralement supérieur, du moyen (3) apte à permettre le contrôle de la vitesse de chute et la surface interne de la conduite (2), notamment l'élément d'étanchéité (5) est constitué d'une matière souple, de préférence d'une succession de poils souples, généralement de sensiblement de même longueur, ou d'un joint creux, de préférence en matière souple.

3. Dispositif (1) selon la revendication 1 ou 2, **caractérisé en ce que** l'élément mobile (3) est du type cône avec pointe en bas, du type sphère, ou du type cylindre, de préférence évidé en forme de « I ».

4. Dispositif (1) selon la revendication 3, **caractérisé en ce que** l'élément mobile (3) a une hauteur comprise de une à cinq fois le diamètre interne de la conduite (2) et de préférence de une à deux fois le diamètre interne de la conduite (2).

5. Dispositif selon la revendication 3 ou 4, **caractérisé en ce que** le déplacement de l'élément mobile (3) est obtenu par l'intermédiaire d'au moins un câble (7) reliant une partie supérieure (9) de l'élément mobile (3) à un moyen moteur.

6. Dispositif (1) selon l'une quelconque des revendications 1 à 5, **caractérisé en ce que** au moins un moyen d'alimentation, de préférence l'ensemble des moyens d'alimentation, nécessaire(s) à différentes mises en oeuvre dans l'enceinte, est disposé dans la deuxième conduite.

7. Dispositif (1) selon l'une quelconque des revendications 1 à 6, **caractérisé en ce qu'**une troisième conduite (11) est disposée selon un axe sensiblement parallèle à l'axe (X'X) de la conduite (2) destinée à l'introduction des particules solides (4), notamment la troisième conduite (11) est ouverte sensiblement sur toute sa longueur.

8. Dispositif (1) selon la revendication 7, **caractérisé en ce que** la deuxième conduite (10) est destinée à être maintenue en dépression pour permettre l'aspiration des poussières et éventuellement des brisures éventuelles, présentes dans l'enceinte (8), et **en ce que** au moins un moyen d'alimentation, de préférence l'ensemble des moyens d'alimentation, nécessaire(s) à différentes mises en oeuvre dans l'enceinte (8), est disposé dans la troisième conduite (11).

9. Dispositif (1) selon la revendication 6 ou 8, **caractérisé en ce que** le moyen d'alimentation est un tuyau d'alimentation en fluide liquide ou gazeux ou un câble électrique.

10. Dispositif (1) selon l'une quelconque des revendications 6 à 9, **caractérisé en ce que** la section de chacune des deuxième et troisième conduites, si ces conduites sont présentes, est, indépendamment l'une de l'autre, comprise de 5 à 1000 centimètres carrés, et de préférence de 20 à 1000 centimètres carrés.

11. Dispositif (1) selon l'une quelconque des revendications précédentes, **caractérisé en ce que** la section de la conduite (2) destinée à l'introduction des particules solides (4) dans l'enceinte (8) est comprise de 20 à 2000 centimètres carrés, et de préférence de 100 à 1000 centimètres carrés.

12. Dispositif selon l'une quelconque des revendications 1 à 11, **caractérisé en ce que** la longueur d'un élément unitaire (20a, 20b, 20c...) est comprise de 1,00 à 6,00 mètres, de préférence de 1,00 à 2,00 mètres.

13. Dispositif selon l'une quelconque des revendications 1 à 12, **caractérisé en ce que** les éléments unitaires (20a, 20b, 20c...) sont fixés les uns aux autres par au moins un moyen de fixation disposé généralement à l'extérieur des éléments unitaires, par exemple par des tiges filetées munies d'écrous à leurs extrémités et disposées. à l'extérieur des éléments unitaires.

14. Dispositif selon l'une quelconque des revendications 1 à 13, **caractérisé en ce que**, sur chaque élément unitaire (20a, 20b, 20c...), sont fixées au moins deux brides de fixation (28,29), de préférence diamétralement opposées, destinées chacune à l'accrochage et/ou au guidage d'au moins une chaîne de fixation nécessaire au maintien de la manche (20) à l'intérieur de l'enceinte (8).

15. Dispositif (1) selon l'une quelconque des revendications 1 à 14, **caractérisé en ce que** la manche (20) est réalisée en matériau rigide, tel que l'aluminium, l'acier, inoxydable ou non, ou tout matériau composite offrant une résistance importante aux chocs et à la déformation.

16. Procédé de chargement d'une enceinte (8), notamment d'un réacteur chimique (8), avec des particules solides (4), comprenant l'utilisation du dispositif (1) de chargement selon l'une quelconque des revendications 1 à 15.

17. Procédé de chargement d'une enceinte (8) selon la revendication 16, dans lequel le dispositif (1) de chargement est fixé par sa partie supérieure, généralement au niveau d'une ouverture (8b) présente dans la partie supérieure (8a) de l'enceinte (8).

18. Procédé de chargement d'une enceinte (8), selon l'une des revendications 16 ou 17, **caractérisé en ce que** le dispositif (1) est fixé dans sa partie basse par au moins une chaîne de fixation, généralement reliée à au moins un moyen de levage disposé de préférence au niveau le plus élevé de l'enceinte à charger, notamment le dispositif (1) est relevé périodiquement pour libérer de l'espace à charger dans l'enceinte (8).

19. Procédé de chargement d'une enceinte (8) selon l'une quelconque des revendications 16 à 18, **caractérisé en ce que** le moyen (3) apte à permettre le contrôle de la vitesse de chute des particules (4) dans ladite conduite (2) est positionné en début de chargement en position haute (H) dans la manche (20) avant l'introduction des particules solides (4) par l'extrémité supérieure (20d) de ladite manche (20).

20. Procédé de chargement d'une enceinte (8) selon l'une quelconque des revendications 16 à 19, **caractérisé en ce que** le moyen (3) apte à permettre le contrôle de la vitesse de chute des particules (4) dans ladite conduite (2) est descendu à sa position de repos (R) située (26) à proximité de l'extrémité inférieure (20e) de la manche (20).

21. Procédé de chargement d'une enceinte (8) selon l'une quelconque des revendications 16 à 20, **caractérisé en ce que** les particules solides (4) sont déversées dans l'enceinte (8) par l'intermédiaire d'un tube (15) relié à la manche (20) par une jonction (14) située au-dessus de la partie supérieure (9) du moyen (3) apte à permettre le contrôle de la vitesse de chute des particules (4) dans ladite conduite (2) quand celui-ci (3) est en position haute (H) dans la manche (20).

22. Procédé de chargement d'une enceinte (8) selon l'une quelconque des revendications 16 à 21, **caractérisé en ce qu'**il comprend, en outre, la répartition, par exemple par un opérateur, des particules solides (4) sortant par un tube (21) relié à la partie inférieure (20e) de la manche (20), sur toute la surface du fond (8e) de l'enceinte (8) ou d'un front de chargement.

23. Procédé de chargement d'une enceinte (8) selon l'une quelconque des revendications 16 à 21, **caractérisé en ce qu'**il comprend, en outre, l'alimentation, par les particules solides (4) sortant par un tube (21) relié à la manche (20), de tout dispositif de répartition automatique des particules solides sur toute la surface du fond (8d) de l'enceinte (8) ou du front de chargement.

24. Procédé de chargement d'une enceinte (8) selon l'une quelconque des revendications 16 à 23, caractérisé en ce l'on loge tout câble ou tuyau nécessaire aux activités de chargement et de répartition des particules solides dans l'enceinte, dans une troisième conduite (11).

## Claims

1. Device (1) for loading solid particles (4) into a vessel (8), especially a chemical reactor (8), comprising a duct (20) in which the solid particles (4) can flow, generally from the top down, said duct (20) comprising at least one pipe (2) of substantially vertical axis (X'X), preferably made of a rigid material, said device being **characterized in that**:
- the pipe (2) contains at least one means (3) capable of controlling the rate of fall of the particles (4) in said pipe (2), this means being a movable element (3) capable of transporting the solid particles (4); and
- the duct (20) comprises several identical unitary elements (20a, 20b, 20c) that fit in succession one into the other,
and **in that** a second pipe (10) is placed along an axis substantially parallel to the axis (X'X) of the pipe (2) intended for introducing the solid particles (4), the second pipe (10) being able to be maintained under reduced pressure so as to allow the sucking-out (A) of the dust and possibly any fragments present in the vessel (8).

2. Device (1) according to Claim 1, **characterized in that** at least one sealing element (5) is placed between an outer edge, generally an upper edge, of the means (3) capable of controlling the rate of fall and the internal surface of the pipe (2), the sealing element (5) consisting especially of a flexible material, preferably a succession of flexible hairs, generally of substantially the same length, or a hollow seal, preferably made of a flexible material.

3. Device (1) according to Claim 1 or 2, **characterized in that** the movable element (3) is of the downwardly pointed cone type, of the sphere type or of the cylinder type, preferably recessed in the form of a "I".

4. Device (1) according to Claim 3, **characterized in that** the movable element (3) has a height of between one and five times the inside diameter of the pipe (2) and preferably one to two times the inside diameter of the pipe (2).

5. Device according to Claim 3 or 4, **characterized in that** the movable element (3) is moved by means of at least one cable (7) connecting an upper portion (9) of the movable element (3) to a motor means.

6. Device (1) according to any one of Claims 1 to 5, **characterized in that** at least one supply means, preferably the set of supply means, necessary for various uses in the vessel, is placed in the second pipe.

7. Device (1) according to any one of Claims 1 to 6, **characterized in that** a third pipe (11) is placed along an axis substantially parallel to the axis (X'X) of the pipe (2) intended for introducing the solid particles (4), the third pipe (11) being especially open over substantially its entire length.

8. Device (1) according to Claim 7, **characterized in that** the second pipe (10) is intended to be maintained under reduced pressure in order to suck out the dust and possibly any fragments present in the vessel (8) and **in that** at least one supply means, preferably the set of supply means, necessary for various uses in the vessel (8), is placed in the third pipe (11).

9. Device (1) according to Claim 6 or 8, **characterized in that** the supply means is a hose supplying a liquid or gaseous fluid or an electrical cable.

10. Device (1) according to any one of Claims 6 to 9, **characterized in that** the cross section of each of the second and third pipes, if these pipes are present, is, independently of each other, from 5 to 1000 square centimetres and preferably 20 to 1000 square centimetres.

11. Device (1) according to any one of the preceding claims, **characterized in that** the cross section of the pipe (2) intended for introducing the solid particles (4) into the vessel (8) is from 20 to 2000 square centimetres and preferably 100 to 1000 square centimetres.

12. Device according to any one of Claims 1 to 11, **characterized in that** the length of a unitary element (20a, 20b, 20c, etc.) is from 1.00 to 6.00 metres, preferably 1.00 to 2.00 metres.

13. Device according to any one of Claims 1 to 12, **characterized in that** the unitary elements (20a, 20b, 20c, etc.) are fastened to one another by at least one fastening means generally placed to the outside of the unitary elements, for example by threaded rods provided with nuts at their ends and placed to the outside of the unitary elements.

14. Device according to any one of Claims 1 to 13, **characterized in that** at least two, preferably diametrically opposed, fastening flanges (28, 29) are fastened to each unitary element (20a, 20b, 20c, etc.), each flange being intended for attaching and/or guiding at least one fastening chain necessary for keeping the duct (20) inside the vessel (8).

15. Device (1) according to any one of Claims 1 to 14, **characterized in that** the duct (20) is made of a rigid material, such as aluminium, steel, stainless or not, or any composite providing high impact strength and resistance to deformation.

16. Method of loading a vessel (8), especially a chemical reactor (8) with solid particles (4), comprising the use of the loading device (1) according to any one of Claims 1 to 15.

17. Method of loading a vessel (8) according to Claim 16, in which the loading device (1) is fastened via its upper portion, generally at an opening (8b) present in the upper portion (8a) of the vessel (8).

18. Method of loading a vessel (8) according to either of Claims 16 and 17, **characterized in that** the device (1) is fastened in its lower portion by at least one fastening chain, generally connected to at least one lifting means preferably placed at the highest level of the vessel to be loaded, the device (1) being especially raised periodically in order to free the space in the vessel (8) to be loaded.

19. Method of loading a vessel (8) according to any one of Claims 16 to 18, **characterized in that** the means (3) capable of controlling the rate of fall of the particles (4) in said pipe (2) is positioned at the start of loading in a high position (H) in the duct (20) before the solid particles (4) are introduced via the upper end (20d) of said duct (20).

20. Method of loading a vessel (8) according to any one of Claims 16 to 19, **characterized in that** the means (3) capable of controlling the rate of fall of the particles (4) in said duct (2) is lowered into its rest position (R) located (at 26) close to the lower end (20e) of the duct (20).

21. Method of loading a vessel (8) according to any one of Claims 16 to 20, **characterized in that** the solid particles (4) are poured into the vessel (8) via a tube (15) connected to the duct (20) via a junction (14) located above the upper portion (9) of the means (3) capable of controlling the rate of fall of the particles (4) in said pipe (2) when the means (3) is in the high position (H) in the duct (20).

22. Method of loading a vessel (8) according to any one of Claims 16 to 21, **characterized in that** it further includes the distribution, for example by an operator, of the solid particles (4) exiting via a tube (21) connected to the lower portion (20e) of the duct (20), over the entire surface of the bottom (8e) of the vessel (8) of a loading front.

23. Method of loading a vessel (8) according to any one of Claims 16 to 21, **characterized in that** it further includes the supply, by the solid particles (4) exiting via a tube (21) connected to the duct (20), of any device for automatically distributing the solid particles over the entire surface of the bottom (8d) of the vessel (8) or of the loading front.

24. Method of loading a vessel (8) according to any one of Claims 16 to 23, **characterized in that** any cable or hose necessary for the activities of loading and distributing the solid particles in the vessel is housed in a third pipe (11).

## Patentansprüche

1. Vorrichtung (1) zum Laden fester Partikel (4) in einen Behälter (8), insbesondere einen chemischen Reaktor (8), mit einer Hülse (20), in der die Partikel im Allgemeinen von oben nach unten zirkulieren können, wobei diese Hülse (20) zumindest eine Leitung (2), die vorzugsweise aus steifem Material gebildet ist, mit einer im Wesentlichen vertikalen Achse (X'X) enthält,
wobei die Vorrichtung **dadurch gekennzeichnet ist, dass**
die Leitung (2) zumindest ein Mittel (3) enthält, das geeignet ist, eine Kontrolle der Fallgeschwindigkeit der Partikel (4) in der Leitung (2) zu ermöglichen, wobei dieses Mittel ein bewegliches Element ist, das geeignet ist, den Transport der festen Partikel (4) sicherzustellen, und
die Hülse (20) mehrere identische Einheitselemente (20a, 20b, 20c) enthält, aufeinander folgend ineinander gefügt sind, und
dass eine zweite Leitung (10) entlang einer Achse bereitgestellt ist, die im Wesentlichen parallel zu der Achse (X'X) der Leitung (2) ist, die zum Einführen fester Partikel (4) bestimmt ist, wobei die zweite Leitung (10) daran angepasst ist, auf Unterdruck gehalten zu werden, um das Absaugen (A) von Staub und möglicherweise von Bruchstücken, die möglicherweise in dem Behälter (8) vorhanden sind, zu ermöglichen.

2. Vorrichtung (1) gemäß Anspruch 1, **dadurch gekennzeichnet, dass** zumindest ein Dichtungselement (5) zwischen einem Außenrand, im Allgemeinen dem oberen, des Mittels (3), das geeignet ist, eine Kontrolle der Fallgeschwindigkeit zu ermöglichen, und der Innenfläche der Leitung (2) angeordnet ist, wobei das Dichtungselement (5) insbesondere aus einem nachgiebigen Material gebildet ist, vorzugsweise aus einer Reihe nachgiebiger Haare, im Allgemeinen von im Wesentlichen gleicher Länge, oder aus einer Hohlfuge, vorzugsweise aus nachgiebigem Material.

3. Vorrichtung (1) gemäß Anspruch 1 oder 2, **dadurch gekennzeichnet, dass** das bewegliche Element (3) vom Kegeltyp mit nach unten zeigender Spitze, vom Kugeltyp oder vom vorzugsweise in Form eines "I" ausgebildeten Zylindertyp ist.

4. Vorrichtung (1) gemäß Anspruch 3, **dadurch gekennzeichnet, dass** das bewegliche Element (3) eine Höhe hat, die innerhalb des Einfachen bis Fünffachen des Innendurchmessers der Leitung (2) liegt, et vorzugsweise innerhalb des Einfachen bis Zweifachen des Innendurchmessers der Leitung (2).

5. Vorrichtung (1) gemäß Anspruch 3 oder 4, **dadurch gekennzeichnet, dass** die Bewegung des beweglichen Elements (3) mittels zumindest eines Drahts (7) erzielt wird, der einen oberen Abschnitt (9) des beweglichen Elements (3) mit einem Motor verbindet.

6. Vorrichtung (1) gemäß einem der Ansprüche 1 bis 5, **dadurch gekennzeichnet, dass** zumindest ein Zuführmittel, vorzugsweise die Gesamtheit der Zuführmittel, die für den Betrieb des Behälters erforderlich sind, in der zweiten Leitung angeordnet ist.

7. Vorrichtung (1) gemäß einem der Ansprüche 1 bis 6, **dadurch gekennzeichnet, dass** eine dritte Leitung (11) entlang einer Achse bereitgestellt ist, die im Wesentlichen parallel zu der Achse (X'X) der Leitung (2) ist, die zum Einführen fester Partikel (4) bestimmt ist, wobei die dritte Leitung (11) insbesondere über im Wesentlichen ihre gesamte Länge offen ist.

8. Vorrichtung (1) gemäß Anspruch 7, **dadurch gekennzeichnet, dass** die zweite Leitung (10) dazu bestimmt ist, auf Unterdruck gehalten zu werden, um das Absaugen von Staub und möglicherweise von möglichen Bruchstücken, die in dem Behälter (8) vorhanden sind, zu ermöglichen, und dass zumindest ein Zuführmittel, vorzugsweise die Gesamtheit der Zuführmittel, die für den Betrieb des Behälters (8) erforderlich sind, in der dritten Leitung (11) angeordnet ist.

9. Vorrichtung (1) gemäß Anspruch 6 oder 8, **dadurch gekennzeichnet, dass** das Zuführmittel eine Speiseleitung für ein flüssiges oder gasförmiges Fluid oder ein elektrisches Kabel ist.

10. Vorrichtung (1) gemäß einem der Ansprüche 6 bis 9, **dadurch gekennzeichnet, dass** der Querschnitt sowohl der zweiten als auch der dritten Leitung, wenn diese Leitungen vorhanden sind, unabhängig voneinander zwischen 5 und 1000 Quadratzentimeter liegen, vorzugsweise zwischen 20 und 1000 Quadratzentimeter.

11. Vorrichtung (1) gemäß einem der vorigen Ansprüche, **dadurch gekennzeichnet, dass** der Querschnitt der Leitung (2), die zum Einführen fester Partikel (4) in den Behälter (8) bestimmt ist, zwischen 20 und 2000 Quadratzentimeter liegt, vorzugsweise zwischen 100 und 1000 Quadratzentimeter.

12. Vorrichtung gemäß einem der Ansprüche 1 bis 11, **dadurch gekennzeichnet, dass** die Länge eines Einheitselements (20a, 20b, 20c ...) zwischen 1,00 und 6,00 Meter liegt, vorzugsweise zwischen 1,00 und 2,00 Meter.

13. Vorrichtung gemäß einem der Ansprüche 1 bis 12, **dadurch gekennzeichnet, dass** die Einheitselemente (20a, 20b, 20c ...) mittels zumindest eines Befestigungsmittels miteinander befestigt sind, das im Allgemeinen außerhalb der Einheitselemente angeordnet ist, beispielsweise über Gewindestangen, die an ihren Enden mit Muttern versehen und außerhalb der Einheitselemente angeordnet sind.

14. Vorrichtung gemäß einem der Ansprüche 1 bis 13, **dadurch gekennzeichnet, dass** an jedem Einheitselement (20a, 20b, 20c...) zumindest zwei Befestigungslaschen (28, 29) befestigt sind, vorzugsweise diametral gegenüberliegend, von denen jede bestimmt ist zum Ankoppeln oder Führen zumindest einer Befestigungskette, die zum Halten der Hülse (20) im Inneren des Gefäßes (8) erforderlich ist.

15. Vorrichtung (1) gemäß einem der Ansprüche 1 bis 14, **dadurch gekennzeichnet, dass** die Hülse (20) aus einem steifen Material besteht wie z.B. Aluminium, rostfreiem oder nicht rostfreiem Stahl, oder jedes Verbundmaterial, das eine beträchtliche Widerstandsfähigkeit gegenüber Stößen und Verformung aufweist.

16. Verfahren zum Beladen eines Behälters (8), insbesondere eines chemischen Reaktors (8), mit festen Partikeln (4) unter Verwendung einer Ladevorrichtung (1) gemäß einem der Ansprüche 1 bis 15.

17. Verfahren zum Beladen eines Behälters (8) gemäß Anspruch 16, wobei die Ladevorrichtung (1) über ihren oberen Abschnitt im Allgemeinen auf der Höhe einer Öffnung (8b), die in dem oberen Abschnitt (8a) des Behälters (8) gebildet ist, befestigt ist.

18. Verfahren zum Beladen eines Behälters (8) gemäß Anspruch 16 oder 17, **dadurch gekennzeichnet, dass** die Ladevorrichtung (1) an ihrem unteren Abschnitt über zumindest eine Befestigungskette befestigt ist, die im Allgemeinen mit zumindest einem Hebemittel verbunden ist, das vorzugsweise an dem der höchsten Stelle des zu beladenden Behälters angeordnet ist, wobei die Vorrichtung (1) vorzugsweise periodisch angehoben wird, um den zu beladenden Raum in dem Behälter (8) frei zu machen.

19. Verfahren zum Beladen eines Behälters (8) gemäß einem der Ansprüche 16 bis 18, **dadurch gekennzeichnet, dass** das Mittel (3) das geeignet ist, die Kontrolle der Fallgeschwindigkeit der Partikel (4) in der Leitung (2) zu ermöglichen, zu Beginn der Beladung vor dem Einführen fester Partikel (4) über das obere Ende (20d) der Hülse (20) an einer hohen Position (H) in der Hülse (20) angeordnet wird.

20. Verfahren zum Beladen eines Behälters (8) gemäß einem der Ansprüche 16 bis 19, **dadurch gekennzeichnet, dass** das Mittel (3), das geeignet ist, die Kontrolle der Fallgeschwindigkeit der Partikel (4) in der Leitung (2) zu ermöglichen, auf seine Ruheposition (R) abgesenkt wird, die in der Nähe des unteren Endes (20e) der Hülse (20) liegt (26).

21. Verfahren zum Beladen eines Behälters (8) gemäß einem der Ansprüche 16 bis 20, **dadurch gekennzeichnet, dass** die festen Partikel (4) mittels eines Rohres (15) in den Behälter abgelassen werden (8), das mit der Hülse (20) über ein Verbindungsstück (14) verbunden ist, das oberhalb des oberen Abschnitts (9) des Mittels (3) liegt, das geeignet ist, die Kontrolle der Fallgeschwindigkeit der Partikel (4) in der Leitung (2) zu ermöglichen, wenn dieses (3) an der hohen Position (H) in der Hülse (20) angeordnet ist.

22. Verfahren zum Beladen eines Behälters (8) gemäß einem der Ansprüche 16 bis 21, **dadurch gekennzeichnet, dass** es au-βerdem die Verteilung der festen Partikel (4), die über ein Rohr (21) austreten, das mit dem unteren Abschnitt (20e) der Hülse (20) verbunden ist, über die gesamte Oberfläche des Bodens (8e) des Behälters (8) oder einer Ladefront enthält, beispielsweise durch einen Bediener.

23. Verfahren zum Beladen eines Behälters (8) gemäß einem der Ansprüche 16 bis 21, **dadurch gekennzeichnet, dass** es au-βerdem die Speisung jeder Vorrichtung zum automatischen Verteilen über die gesamte Oberfläche des Bodens (8e) des Behälters (8) oder einer Ladefront mit festen Partikeln (4) enthält, die die über ein Rohr (21) austreten, das mit der Hülse (20) verbunden ist.

24. Verfahren zum Beladen eines Behälters (8) gemäß einem der Ansprüche 16 bis 23, **dadurch gekennzeichnet, dass** jedes Kabel oder jede Leitung, die für die Vorgänge des Ladens und Verteilens fester Partikel in dem Behälter erforderlich ist, in einer dritten Leitung (11) untergebracht wird.
